# EUROPEAN PATENT SPECIFICATION

(11) **EP 3 335 851 B1**
(45) Date of publication and mention of the grant of the patent: **26.07.2023**
(21) Application number: 16204908.4
(22) Date of filing: 18.12.2016
(51) Int. Cl.: B29C 45/14, B29L 31/30, B29K 709/08

(54) **FIXED WINDOW ASSEMBLY FOR A VEHICLE AND METHOD OF MANUFACTURING SAME**
BEFESTIGTE FENSTERANORDNUNG FÜR EIN FAHRZEUG UND VERFAHREN ZUR HERSTELLUNG DAVON
ENSEMBLE DE FENÊTRE FIXE POUR UN VÉHICULE ET SON PROCÉDÉ DE FABRICATION

(43) Date of publication of application: 20.06.2018
(73) Proprietor: Henniges Automotive Sealing Systems North America, Inc., Wilmington, DE 19808 (US)
(72) Inventor: HUSEK, Petr, Mlada Boleslav (CZ); SLAVIK, Daniel, Bela pod Bezdezem (CZ); GRÜTER, Achim, Brueggen (DE)
(74) Representative: McDonough, Jonathan

(56) References cited:
- EP-A1- 1 688 248
- WO-A1-2010/106868
- CN-U- 204 172 665

## Description

### BACKGROUND

### 1. Field of the Invention

The subject invention relates to a method of manufacturing a fixed window assembly for a vehicle.

### 2. Description of Related Art

Decorative trim is becoming increasingly popular for consumer vehicles, especially decorative trim having metallic, colored, or otherwise designed appearances. Decorative trim allows vehicle manufacturers to design vehicles having, for example, chrome-like trim and contributes an accented finish to visual design of the vehicles while providing sealing properties for windows of the vehicles. Applying sheets of thin metal to trim is expensive in terms of both material costs for sheets of thin metal and processing costs for bonding the metal to sealing elements of the trim. Conventional methods of applying decorative films to sealing elements of trim can also be cost inefficient, as the sealing elements are manufactured separately, and then the decorative film is applied separately. Thus, conventional techniques are inefficient in terms of both time and money.
WO 2010/106868A1 (Central Glass Co. Ltd) discloses a decorative molding which, when a frame is formed on a window glass plate by injection molding, is affixed to the frame simultaneously with the injection molding of the frame and which does not cause an appearance failure during the injection molding and can have any of multiple colours.
EP1688248A1 (DaiNippon Printing Co., Ltd.) discloses a decorative sheet having a base film made of a thermoplastic polyester resin and a decorative layer on the base film, and provides a decorated resin molding produced by using the decorative sheet.

### SUMMARY

The invention is set out in the appended set of claims.

The method advantageously provides a time- and cost-effective method of manufacturing a fixed window assembly. The decorative member is inexpensively applied to the fixed window assembly through a unique configuration and manufacturing technique.

### BRIEF DESCRIPTION OF THE DRAWINGS

Advantages of the present invention will be readily appreciated, as the same becomes better understood by reference to the following detailed description, when considered in connection with the accompanying drawings.
Figure 1 is a perspective view of a fixed window.
Figure 2 is a perspective view of an encapsulation with a fixed glass.
Figure 3 is a sectional view taken along line 3-3 of Figure 2.
Figure 4 is a sectional view taken along line 4-4 of Figure 2.
Figure 5 is an enlarged fragmented view of a bottom edge of the fixed window assembly of Figure 1.
Figure 6 is a sectional view taken along line 6-6 of Figure 5.
Figure 7 is a sectional view taken along line 7-7 of Figure 5.
Figure 8 is a perspective view of a first molding apparatus.
Figure 8A is a perspective view of the first molding apparatus with a decorative member mounted thereto.
Figure 9 is a perspective view of a trim portion.
Figure 10 is an enlarged fragmented view of the trim portion of Figure 9.
Figure 11 is a perspective view of the trim portion.
Figure 12 is another perspective view of the trim portion.
Figure 13 is a sectional view taken along line 13-13 of Figure 11.
Figure 14 is a perspective view of a second molding apparatus.
Figure 15 is a schematic view of the manufacturing process.
Figure 16 is an enlarged fragmented view taken along line 16 of Figure 1.

### DETAILED DESCRIPTION

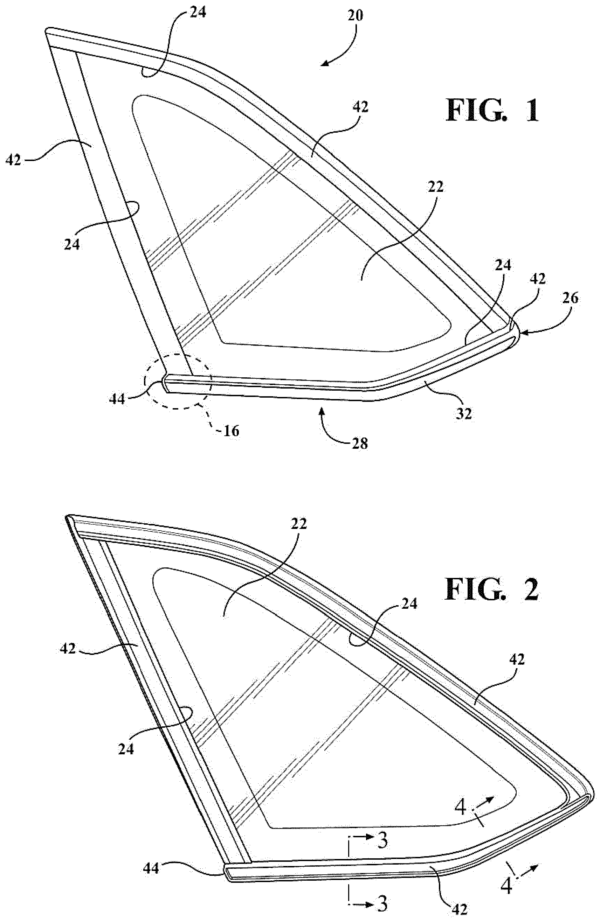

Referring to the Figures, wherein like numerals indicate like or corresponding parts throughout several views, aspects of a fixed window assembly 20 for a vehicle and method of manufacturing the same are provided. In particular, Figure 1 illustrates an embodiment of the fixed window assembly 20 for the vehicle. As known to those skilled in the industry, fixed window assemblies can be mounted in various locations of the vehicle, including adjacent the A-pillar or C-pillar of the vehicle. The fixed windows can also be carried on a door of the vehicle. Other fixed windows include the rear window and accent windows of a vehicle. In the embodiment illustrated, the fixed window assembly 20 is a fixed side window mounted to a vehicle chassis that is unable to be raised, lowered, or otherwise moved, relative the vehicle. In some embodiments, the fixed window assembly 20 has a substantially trapezoidal or overall triangular configuration. In other embodiments, the fixed window assembly 20 can have a substantially rectangular configuration, or can be of any suitable shape.

As shown in Figures 1-7 and 14-15, the fixed window assembly 20 includes a fixed glass 22 having a periphery 24, with the periphery 24 defining a bottom edge 26 having opposing ends. As shown, the bottom edge 26 of the fixed glass 22 is curved between the ends to accommodate a desired design configuration of the vehicle. As also shown, the fixed glass 22 has a trapezoidal configuration to likewise accommodate a desired design. It is to be appreciated that the fixed glass 22 may be of any suitable configuration, any suitable material and may include tinting or other cosmetic features as known to those skilled in the art.

As best shown in Figures 1, 5-7, 9-13 and 15-16 the fixed window assembly 20 also includes a trim portion 28. Once mounted, as discussed in greater detail below, the trim portion 28, or trim strip, is spaced from, yet adjacent to the fixed glass 22. The trim portion 28 or strip extends along a desired periphery 24 of the fixed window. As shown, the trim portion 28 extends along the bottom edge 26 of the fixed window to provide a desired appearance along the bottom edge 26 of the fixed window. The trim portion 28 or trim strip comprises a polymeric base 30 and a decorative member 32, which define a molded trim as discussed in greater detail below.

The polymeric base 30 is formed of a polymeric material having an exterior surface 34 and an interior surface 36. Preferably, the polymeric base 30 is formed of a thermoplastic polymer to form a rigid polymeric base 30. Even more preferably, the polymeric base 30 is formed of a polypropylene to form the rigid polymeric base 30. The polymeric base 30 may also be a thermosetting polymer. It is to be appreciated that the polymeric base 30 may be formed of any suitable polymeric, or plastic-like, material.

As best shown in Figures 1, 9, 11-12 and 15-16, the polymeric base 30 further includes a terminal end 38 extending between the exterior 34 and interior 36 surfaces. As shown, at least the exterior surface 34 of the polymeric base 30 has an arcuate configuration. Preferably, the exterior 34 and interior 32 surfaces of the polymeric base 30 have arcuate configurations such that the polymeric base 30 is substantially uniform in thickness. As also shown, the trim portion 28 is formed in a curve complementary in configuration to the curve of the bottom edge 26. It is to be appreciated that the arcuate and/or curved configurations and/or configurations of the interior 36 and exterior 34 surfaces can change along the length of the polymeric base 30 to create a desired appearance. It is also to be appreciated that the polymeric base 30 may have any suitable configuration.

The decorative member 32, as shown in Figures 1, 5-7, 8A-13 and 16 is irremovably bonded to the polymeric base 30. Specifically, a portion of the decorative member 32 is bonded to the exterior surface 34 of the polymeric base 30. Preferably, the decorative member 32 is formed of a film having a bonding portion 40 with the exterior surface 34 of the polymeric base 30 bonded to the bonding portion 40. In the most preferred embodiment, the film is a thin, flexible sheet, or foil, of one or more materials that has a desirable appearance and is capable of adhesion or fusion bonding with a polymer. The decorative member 32 can be of an at least partially metallic material, an at least partially vinyl material or any other suitable material. Further, the decorative member 32 can have a chrome-like appearance, a wood-like appearance, a colored appearance, or be of any other suitable appearance. In other words, the decorative member 32 can be any material suitable for bonding to the polymeric base 30 with any desirable appearance. One example is known in the industry as a chrome foil. As mentioned above, the polymeric base 30 can have a curved configuration. As such, once bonded, the film would also have a curved configuration.

Turning to Figures 1-7 and 15-16, an encapsulation 42, which is formed of a polymeric material, is coupled to the periphery 24 of the fixed glass 22. Figures 2-4 show the encapsulation 42 without the trim portion 28. It is to be appreciated that Figures 2-4 are provided for illustrative purposes to clearly identify mounting locations on the encapsulation 42 for the trim portion 28. As discussed in greater detail below, the encapsulation 42 is injected into a mold to mount the trim portion 28 to the fixed glass 22. As such, the configuration of the encapsulation 42 shown in Figures 2-4 would not actually occur in the manufacturing technique of the subject invention.

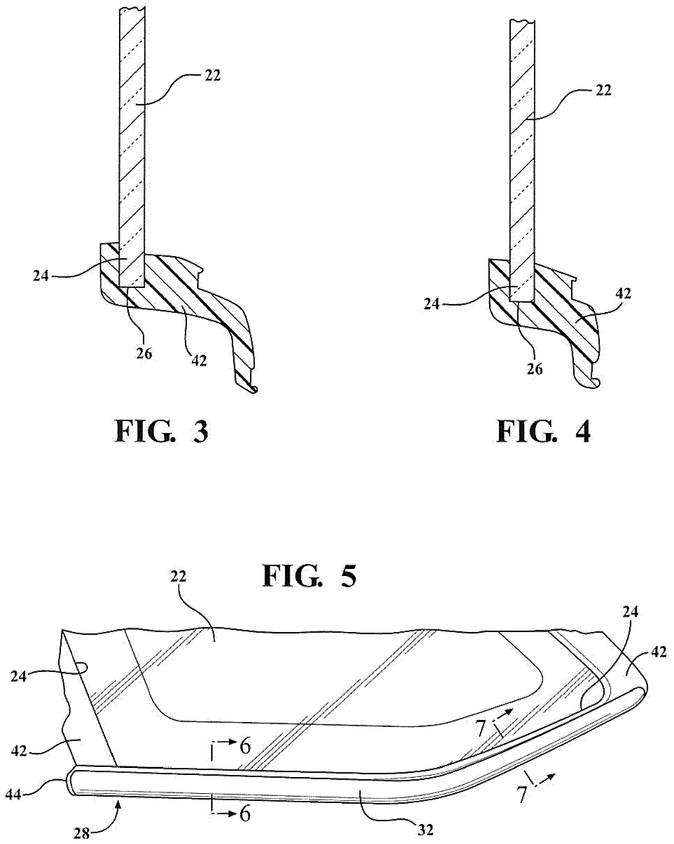

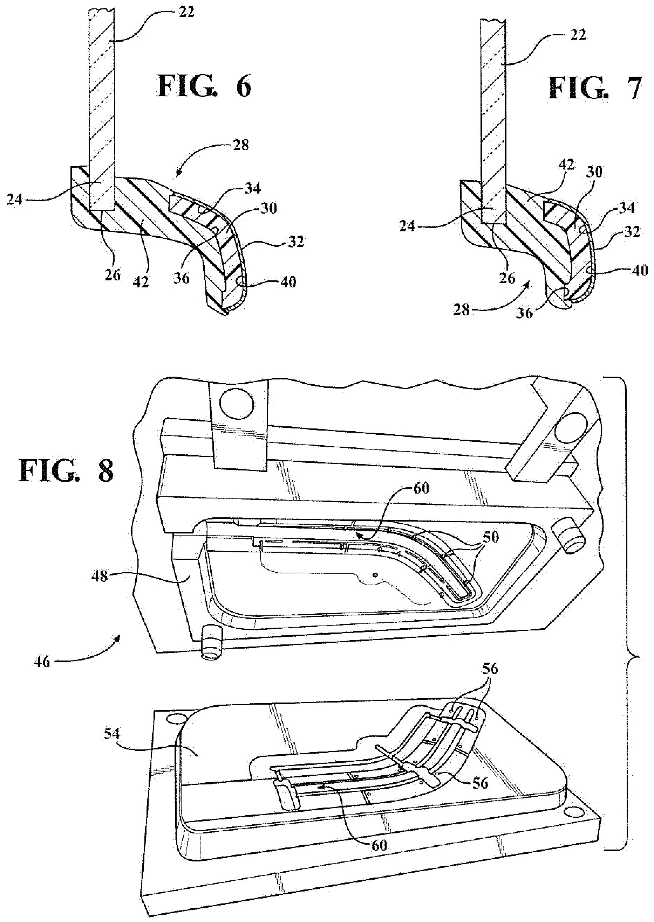

Figures 1, 5-7 and 15-16 illustrate the encapsulation 42 and the trim portion 28 with the encapsulation 42 coupled to the interior surface 36 of the polymeric base 30 to mount the trim portion 28 in the spaced and adjacent position relative to the fixed glass 22. Preferably, the encapsulation 42 is coupled to the periphery 24 of the fixed glass 22 and is simultaneously coupled to the polymeric base 30, through an overmolding process, to mount the trim portion 28 in the adjacent position to the fixed glass 22. The coupling / overmolding of the encapsulation 42 to the fixed glass 22 is best shown in Figures 3-4 and 6-7, and is known to those skilled in the art. The coupling / overmolding of the encapsulation 42 to the trim portion 28 is also shown best in Figures 3-4 (shows mounting locations without trim portion) and Figures 6-7 (shows overmolding of the trim portion). With specific reference to Figures 6-7, the encapsulation 42 is not only coupled to the interior surface of the polymeric base 30, but also encapsulates the sides of the polymeric base 30 and a portion of the exterior surface 34 of the polymeric base 30 to overmold and secure the trim portion 28 to the fixed glass 22. The coupling / overmolding creates a mechanical bond between the polymeric base 30 and the encapsulation 42, which can be in addition to any chemical bonding. The decorative member 32 can be trimmed in such a manner as to accommodate a desired mechanical bond / overmold between the polymeric base 30 and encapsulation 42. It is to be appreciated that the configuration of the encapsulation 42 and polymeric base 30 can vary to accommodate alternative mechanical connections.

As best shown in Figures 6-7, a portion of the encapsulation 42 is disposed between the fixed glass 22 and the trim portion 28 to interconnect the fixed glass 22 and the trim portion 28. In the embodiment shown, the trim portion 28 is specifically mounted adjacent the bottom edge 26 by this portion of the encapsulation 42. The encapsulation 42 may be of any suitable thickness or configuration.

The encapsulation 42 is formed of a thermoplastic polymer to form a rigid polymeric encapsulation 42. Preferably, the encapsulation 42 is formed of a thermoplastic vulcanizate to form a rigid polymeric encapsulation 42. It is to be appreciated that the encapsulation 42 may be formed of any suitable polymeric, plastic-like, material.

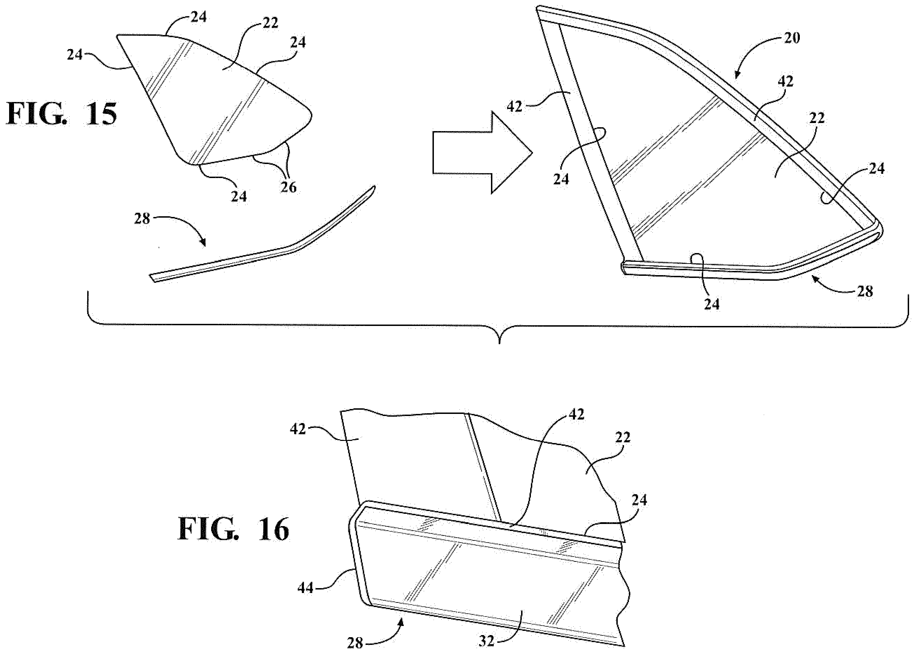

As mentioned above, the polymeric base 30 includes a terminal end 38 extending between the exterior 34 and interior 36 surfaces. As best shown in Figures 1 and 16, the encapsulation 42 is simultaneously coupled to the interior surface 36 of the polymeric base 30, the terminal end 38 of the polymeric base 30 and the periphery 24 of the fixed glass 22. The portion of the encapsulation 42 about the terminal end 38 creates an end cap 44 formed on the terminal end 38 of the polymeric base 30. The end cap 44 provides the end of the polymeric base 30 with a finished appearance, such that the trim portion 28 has a desirable appearance when the end of the trim portion 28 is exposed, such as when a vehicle door is opened.

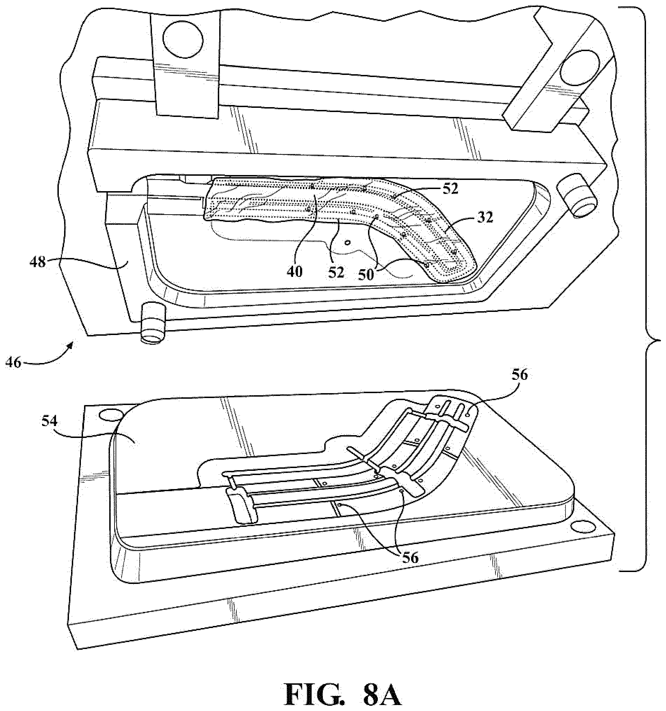

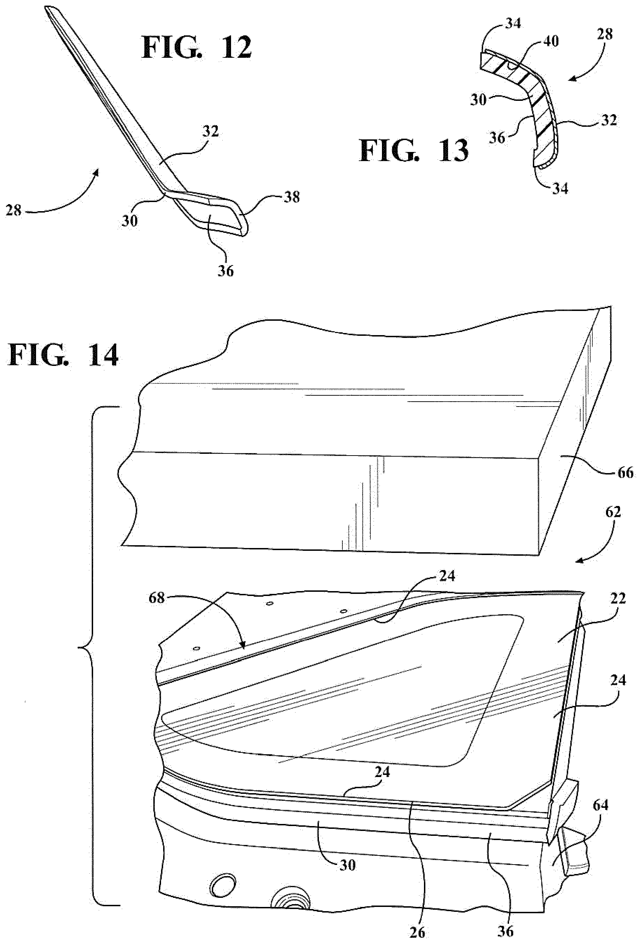

The method of manufacturing the fixed window assembly 20 for the vehicle with the fixed glass 22, encapsulation 42 and trim portion 28 will now be discussed in greater detail. As shown in Figures 8 and 14, and as detailed below, the manufacturing technique of the subject invention utilizes two molding apparatuses.

As shown in Figures 8 and 8A, the decorative member 32 is placed or mounted in a first half 48 of a first molding apparatus 46. The first molding apparatus 46 can be an injection molding machine of any suitable type. The first half 48 of the first molding apparatus 46 includes a plurality of pins 50. The step of mounting the decorative member 32 in the first half 48 of the first molding apparatus 46 includes the step of mounting the decorative member 32 about the pins 50. As mentioned above, the decorative member 32 can be formed of a film or other thin, flexible material. As such, the film is secured to the first molding apparatus 46 by puncturing the thin material through the plurality of pins 50. Preferably, the decorative member 32 has both the bonding portion 40 and excess portions 52. The step of mounting the decorative member 32 in the first half 48 of the first molding apparatus 46 includes the step of mounting the excess portions 52 of the decorative member 32 to the pins 50. Specifically, the excess portions 52 are pressed over the pins 50 to adequately hold the decorative member 32 in place.

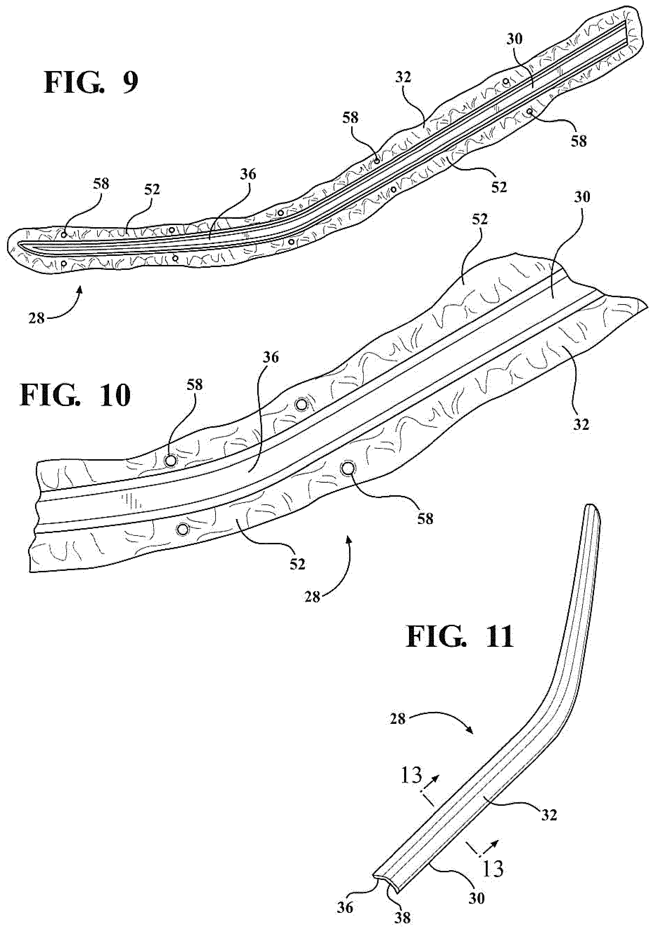

A second half 54 of the first molding apparatus 46 includes a plurality of apertures 56, which are preferably aligned with the pins 50. As such, the method of manufacturing includes the step of inserting the pins 50 within the apertures 56 when the second half 54 of the first molding apparatus 46 contacts the first half 48 of the first molding apparatus 46. As shown in Figure 10, pin holes 58 can be pre-formed in the decorative member 32 prior to locating the decorative member 32 about the pins 50. The pin and aperture arrangement properly secures the decorative member 32 within the first molding apparatus 46.

The second half 54 of the first molding apparatus 46 moves into contact with the first half 48 of the first molding apparatus 46 to form a first mold cavity 60 with the decorative member 32 partially disposed within the first mold cavity 60. In particular, the bonding portion 40 of the decorative member 32 is disposed within the first mold cavity 60 with the excess portions 52 remaining outside of the first mold cavity 60. As appreciated by those skilled in the art, the first mold cavity 60 can have any suitable configuration based on the desired shape of the polymeric base 30.

A polymeric material is injected into the first mold cavity 60 to form the polymeric base 30 within the first mold cavity 60 with the polymeric base 30 bonding to a portion of the decorative member 32 to form the trim portion 28. In other words, the polymeric material is formed on and bonded with the decorative member 32 by injecting a polymer into the first mold cavity 60 with the polymer bonding to the bonding portion 40 of the decorative member 32. Preferably, a thermoplastic polymer is injected into the first mold cavity 60 to form a rigid polymeric base 30 bonded to a portion of the decorative member 32. Even more preferably, a polypropylene is injected into the first mold cavity 60 to form a rigid polymeric base 30 bonded to a portion of the decorative member 32. As mentioned above, the polymeric base 30 may have an arcuate configuration. As such, the step of injecting a polymeric material into the first mold cavity 60 to form the polymeric base 30 can be further defined as injecting a polymeric material into the first mold cavity 60 having an arcuate configuration to form an arcuate polymeric base 30 having an exterior surface 34 bonded to a portion of the decorative member 32 and an interior surface 36 suitable for coupling to the encapsulation 42 in a subsequent step. Further, the step of injecting a polymeric material into the first mold cavity 60 to form the polymeric base 30 can be further defined as injecting a polymeric material into the first mold cavity 60 to form the polymeric base 30 having an exterior surface 34, an opposing interior surface 36 and a terminal end 38 extending between the surfaces

As shown in Figure 9, the trim portion 28 is then removed from the first molding apparatus 46 once suitably cured as known to those skilled in the art. The excess portions 52 of the decorative member 32 are trimmed after being removed and before the step of positioning the trim portion 28 in a second molding apparatus 62 as discussed below. The excess portions 52 can be removed by any suitable method, such as cutting or shearing.

Turning to Figure 14, the fixed glass 22 is separately mounted in a first half 64 of the second molding apparatus 62. The trim portion 28 is also positioned in the first half 64 of the second molding apparatus 62 adjacent the fixed glass 22. The decorative member 32 of the trim portion 28 abuts the first half 64 of the second molding apparatus 62 such that the polymeric base 30 faces outwardly from the first half 64 of the second molding apparatus 62. In other words, the trim portion 28 is installed in the second molding apparatus 62 with the exterior surface 34 facing the first half 64 of the second molding apparatus 62.

A second half 66 of the second molding apparatus 62 moves into contact with the first half 64 of the second molding apparatus 62 to form a second mold cavity 68 with the fixed glass 22 and the polymeric base 30 facing the second mold cavity 68. Specifically, the interior surface 36 of the polymeric base 38 faces the second mold cavity 68.

A polymeric material is injected into the second mold cavity 68 to form the encapsulation 42. As mentioned above, the encapsulation 42 is coupled to the periphery 24 of the fixed glass 22 and is simultaneously coupled to the polymeric base 30 to mount the trim portion 28 in the adjacent position to the fixed glass 22. Preferably, the step of injecting a polymeric material into the second mold cavity 68 to form the encapsulation 42 is further defined as injecting a thermoplastic polymer into the second mold cavity 68 to form a rigid polymeric encapsulation 42 simultaneously coupled to the periphery 24 of the fixed glass 22 and the rigid polymeric base 30. Even more preferably, the step of injecting a polymeric material into the second mold cavity 68 to form the encapsulation 42 is further defined as injecting a copolymer, such as thermoplastic vulcanizate (TPV), into the second mold cavity 68 to form a rigid polymeric encapsulation 42 simultaneously coupled to the periphery 24 of the fixed glass 22 and the rigid polymeric base 30. Further, the step of injecting a polymeric material into the second mold cavity 68 to form the encapsulation 42 can be further defined as injecting a polymeric material into the second mold cavity 68 to form the encapsulation 42 simultaneously coupled to the interior surface 36 of polymeric base 30, the terminal end 38 of the polymeric base 30 and the periphery 24 of the fixed glass 22.

The relative position of the trim portion 28 and fixed glass 22 can vary based on the application and the desired design, but is preferably positioned such that the encapsulation 42 is disposed between the fixed glass 22 and the trim portion 28 to interconnect the fixed glass 22 and trim portion 28. As best shown in Figures 6-7, the encapsulation 42 maintains a relative spacing between the fixed glass 22 and the trim portion 28.

The present invention has been described herein in an illustrative manner. It is to be understood that the terminology which has been used is intended to be in the nature of words of description rather than of limitation.

## Claims

1. A method of manufacturing a fixed window assembly (20) for a vehicle with the assembly having a fixed glass (22), an encapsulation (42) and a trim portion (28), and the trim portion (28) having a polymeric base (30) and a decorative member (32), said method comprising the steps of:
mounting the decorative member (32) in a first half (48) of a first molding apparatus (46);
moving a second half (54) of the first molding apparatus (46) into contact with the first half (48) of the first molding apparatus (46) to form a first mold cavity (60) with the decorative member (32) partially disposed within the first mold cavity (60);
injecting a polymeric material into the first mold cavity (60) to form the polymeric base (30) within the first mold cavity (60) with the polymeric base (30) moldably bonding to a portion of the decorative member (32) to form the trim portion (28);
removing the trim portion (28) from the first molding apparatus (46);
mounting the fixed glass (22) in a first half (64) of a second molding apparatus (62);
positioning the trim portion (28) in the first half (64) of the second molding apparatus (62) adjacent the fixed glass (22) with the decorative member (32) of the trim portion (28) abutting the first half (64) of the second molding apparatus (62) such that the polymeric base (30) faces outwardly from the first half (64) of the second molding apparatus (62);
moving a second half (66) of the second molding apparatus (62) into contact with the first half (64) of the second molding apparatus (62) to form a second mold cavity (68) with the fixed glass (22) and the polymeric base (30) facing the second mold cavity (68); and
injecting a polymeric material into the second mold cavity (68) to form the encapsulation (42) with the encapsulation (42) coupled to a periphery of the fixed glass (22) and simultaneously coupled to the polymeric base (30) to mount the trim portion (28) in the adjacent position to the fixed glass (22).

2. The method as claimed in claim 1 wherein the polymeric material injected into the first mold cavity (60) is a thermoplastic polymer which forms a rigid polymeric base (30); and
the polymeric material injected into the second mold cavity (68) is a thermoplastic polymer which forms a rigid polymeric encapsulation (42).

3. The method as claimed in either of claims 1 or 2 wherein the polymeric material injected into the first mold cavity (60) is a polypropylene; and
the polymeric material injected into the second mold cavity (68) is a thermoplastic vulcanizate.

4. The method as claimed in any one of claims 1 to 3 wherein the first half (48) of the first molding apparatus (46) includes a plurality of pins (50), and wherein the step of mounting the decorative member (32) in the first half (48) of the first molding apparatus (46) includes the step of mounting the decorative member (32) about the pins (50).

5. The method as claimed in claim 4 wherein the decorative member (32) is formed of a film having a bonding portion (40) and excess portions (52), and wherein the step of mounting the decorative member (32) in the first half (48) of the first molding apparatus (46) includes the step of mounting the excess portions (52) of the decorative member (32) to the pins (50).

6. The method as claimed in claim 5 further including the step of trimming the excess portions (52) of the decorative member (32) after the step of removing the trim portion (28) and before the step of positioning the trim portion (28) in the second molding apparatus (62).

7. The method as claimed in any one of claims 1 to 6 wherein the trim portion (28) is positioned in the second molding apparatus (62) spaced from the fixed glass (22) such that the encapsulation (42) is disposed between the fixed glass (22) and the trim portion (28) to interconnect the fixed glass (22) and trim portion (28).

8. The method as claimed in any one of claims 1 to 7 wherein the polymeric material is injected into the first mold cavity (60) to form the polymeric base (30) having an exterior surface (34), an opposing interior surface (36) and a terminal end (38) extending between the surfaces (34, 36), and
the polymeric material is injected into the second mold cavity (68) to form the encapsulation (42) simultaneously coupled to the interior surface (36) of the polymeric base (30), the terminal end (38) of the polymeric base (30) and the periphery of the fixed glass (22).

## Patentansprüche

1. Verfahren für die Fertigung einer feststehenden Scheibenkonstruktion (20) für ein Fahrzeug, wobei die Konstruktion eine feststehende Glasscheibe (22), eine Einfassung (42) und ein Verkleidungsteil (28) aufweist und das Verkleidungsteil (28) eine Polymereinlage (30) und ein Zierelement (32) aufweist, und wobei das Verfahren die folgenden Schritte umfasst:
Einsetzen des Zierelements (32) in eine erste Hälfte (48) eines ersten Formwerkzeugs (46);
Bewegen einer zweiten Hälfte (54) des ersten Formwerkzeugs (46), bis sie mit der ersten Hälfte (48) des ersten Formwerkzeugs (46) in Kontakt kommt, um einen ersten Formhohlraum (60) zu bilden, wobei das Zierelement (32) teilweise innerhalb des ersten Formhohlraums (60) angeordnet ist;
Einspritzen eines Polymerwerkstoffs in den ersten Formhohlraum (60), um die Polymereinlage (30) innerhalb des ersten Formhohlraums (60) auszuformen, wobei die Polymereinlage (30) mit einem Teilbereich des Zierelements (32) formbar verklebt wird und damit das Verkleidungsteil (28) bildet;
Entnahme des Verkleidungsteils (28) aus dem ersten Formwerkzeug (46);
Einsetzen der feststehenden Glasscheibe (22) in eine erste Hälfte (64) eines zweiten Formwerkzeugs (62);
Positionieren des Verkleidungsteils (28) in der ersten Hälfte (64) des zweiten Formwerkzeugs (62), so dass es an die feststehende Glasscheibe (22) anschließt, wobei das Zierelement (32) des Verkleidungsteils (28) an die erste Hälfte (64) des zweiten Formwerkzeugs (62) anschließt, so dass die Polymereinlage (30) von der ersten Hälfte (64) des zweiten Formwerkzeugs (62) aus nach außen zeigt;
Bewegen einer zweiten Hälfte (66) des zweiten Formwerkzeugs (62), bis es mit der ersten Hälfte (64) des zweiten Formwerkzeugs (62) in Kontakt kommt, um einen zweiten Formhohlraum (68) zu bilden, wobei die feststehende Glasscheibe (22) und die Polymereinlage (30) dem zweiten Formhohlraum (68) zugewandt sind; und
Einspritzen eines Polymerwerkstoffs in den zweiten Formhohlraum (68), um die Einfassung (42) auszuformen, wobei die Einfassung (42) mit einem Randbereich der feststehenden Glasscheibe (22) verbunden ist und gleichzeitig mit der Polymereinlage (30) verbunden ist, so dass das Verkleidungsteil (28) in der an die feststehende Glasscheibe (22) angrenzenden Einbaulage montiert werden kann.

2. Das Verfahren nach Anspruch 1, wobei es sich bei dem in den ersten Formhohlraum (60) eingespritzten Polymerwerkstoff um ein thermoplastisches Polymer handelt, mit dem eine starre Polymereinlage (30) geformt wird; und
wobei es sich bei dem in den zweiten Formhohlraum (68) eingespritzten Polymerwerkstoff um ein thermoplastisches Polymer handelt, mit dem eine starre Polymereinfassung (42) geformt wird.

3. Das Verfahren nach einem der Ansprüche 1 oder 2, wobei es sich bei dem in den ersten Formhohlraum (60) eingespritzten Polymerwerkstoff um ein Polypropylen handelt; und
wobei es sich bei dem in den zweiten Formhohlraum (68) eingespritzten Polymerwerkstoff um ein thermoplastisches Vulkanisat handelt.

4. Das Verfahren nach einem der Ansprüche 1 bis 3, wobei die erste Hälfte (48) des ersten Formwerkzeugs (46) eine Vielzahl von Stiften (50) aufweist und wobei der Schritt, bei dem das Zierelement (32) in der ersten Hälfte (48) des ersten Formwerkzeugs (46) angebracht wird, den Schritt, in dem das Zierelement (32) um die Stifte (50) angebracht wird, einschließt.

5. Das Verfahren nach Anspruch 4, wobei das Zierelement (32) aus einer Folie mit einem Verklebungsteil (40) und überschüssigen Teilen (52) geformt wird und wobei der Schritt, bei dem das Zierelement (32) in der ersten Hälfte (48) des ersten Formwerkzeugs (46) angebracht wird, den Schritt, in dem die überschüssigen Teile (52) des Zierelements (32) an den Stiften (50) angebracht werden, einschließt.

6. Das Verfahren nach Anspruch 5, das ferner den Schritt umfasst, bei dem die überschüssigen Teile (52) des Zierelements (32) nach dem Entfernen des Verkleidungsteils (28) und vor dem Positionieren des Verkleidungsteils (28) im zweiten Formwerkzeug (62) entfernt werden.

7. Das Verfahren nach einem der Ansprüche 1 bis 6, bei dem das Verkleidungsteil (28) im zweiten Formwerkzeug (62) in einem gewissen Abstand zu der feststehenden Glasscheibe (22) positioniert wird, so dass die Einfassung (42) zwischen der feststehenden Glasscheibe (22) und dem Verkleidungsteil (28) angeordnet ist und damit die feststehende Glasscheibe (22) und das Verkleidungsteil (28) miteinander verbunden werden.

8. Das Verfahren nach einem der Ansprüche 1 bis 7, wobei der Polymerwerkstoff in den ersten Formhohlraum (60) eingespritzt wird, um die Polymereinlage (30) zu formen, welche eine Außenfläche (34), eine gegenüberliegende Innenfläche (36) und ein Abschlussstück (38) aufweist, das sich zwischen den Flächen (34, 36) erstreckt, und
wobei der Polymerwerkstoff in den zweiten Formhohlraum (68) eingespritzt wird, um die Einfassung (42) zu bilden, die gleichzeitig mit der Innenfläche (36) der Polymereinlage (30), dem Abschlussstück (38) der Polymereinlage (30) und dem Randbereich der feststehenden Glasscheibe (22) verbunden ist.

## Revendications

1. Procédé de fabrication d'un ensemble formant vitre fixe (20) d'un véhicule, l'ensemble présentant une plaque en verre fixe (22), une encapsulation (42) et une partie formant décoration (28), la partie formant décoration (28) présentant une base en polymère (30) et un élément de décoration (32), ledit procédé comprenant les étapes de :
montage de l'élément de décoration (32) dans une première moitié (48) d'un premier équipement de moulage (46) ;
déplacement d'une deuxième moitié (54) du premier équipement de moulage (46) pour venir au contact avec la première moitié (48) de l'équipement de moulage (46) afin de former une première cavité de moulage (60), l'élément de décoration (32) étant disposé partiellement à l'intérieur de la première cavité de moulage (60) ;
injection d'un matériau polymérique dans la première cavité de moulage (60) afin de former la base en polymère (30) à l'intérieur de la première cavité de moulage (60), la base en polymère (30) se liant par moulage à une partie de l'élément de décoration (32) pour former la partie formant décoration (28) ;
enlèvement de la partie formant décoration (28) du premier équipement de moulage (46) ;
montage de la plaque de verre fixe (22) dans une première moitié (64) d'un deuxième équipement de moulage (62) ;
positionnement de la partie formant décoration (28) dans la première moitié (64) du deuxième équipement de moulage (62) de manière adjacente à la plaque de verre fixe (22), l'élément de décoration (32) de la partie formant décoration (28) venant en butée contre la première moitié (64) du deuxième équipement de moulage (62) de sorte que la base en polymère (30) s'oriente vers l'extérieur depuis la première moitié (64) du deuxième équipement de moulage (62) ;
déplacement d'une deuxième moitié (66) du deuxième équipement de moulage (62) pour venir au contact de la première moitié (64) du deuxième équipement de moulage (62) pour former une deuxième cavité de moulage (68), la plaque en verre fixe (22) et la base en polymère (30) s'orientant vers la deuxième cavité de moulage (68) ; et
injection d'un matériau polymérique dans la deuxième cavité de moulage (68) pour former l'encapsulation (42), celle-ci (42) étant couplée à une périphérie de la plaque en verre fixe (22) et couplée de manière simultanée à la base en polymère (30), afin de monter la partie formant décoration (28) dans la position adjacente à la plaque en verre fixe (22).

2. Procédé selon la revendication 1, selon lequel le matériau polymérique injecté dans la première cavité de moulage (60) est un polymère thermoplastique formant une base rigide en polymère (30) ; et
le matériau polymérique injecté dans la deuxième cavité de moulage (68) est un matériau thermoplastique formant une encapsulation rigide en polymère (42).

3. Procédé selon la revendication 1 ou la revendication 2, selon lequel le matériau polymérique injecté dans la première cavité de moulage (60) est un polypropylène ; et
le matériau polymérique injecté dans la deuxième cavité de moulage (68) est un thermoplastique vulcanisé.

4. Procédé selon l'une quelconque des revendications 1 à 3, selon lequel la première moitié (48) du premier équipement de moulage (46) comporte une pluralité de broches (50), et selon lequel l'étape de montage de l'élément de décoration (32) dans la première moitié (48) du premier équipement de moulage (46) comporte l'étape de montage de l'élément de décoration (32) autour des broches (50).

5. Procédé selon la revendication 4, selon lequel l'élément de décoration (32) est formé d'un film présentant une partie de fixation (40) et des parties excédentaires (52), et selon lequel l'étape de montage de l'élément de décoration (32) dans la première moitié (48) du premier équipement de moulage (46) comporte l'étape de montage des parties excédentaires (52) de l'élément de décoration (32) aux broches (50).

6. Procédé selon la revendication 5, comportant en outre l'étape d'enlèvement des parties excédentaires (52) de l'élément de décoration (32) après l'étape d'enlèvement de la partie formant décoration (28) et avant l'étape de positionnement de la partie formant décoration (28) dans le deuxième équipement de moulage (62).

7. Procédé selon l'une quelconque des revendications 1 à 6, selon lequel la partie formant décoration (28) est positionnée dans le deuxième équipement de moulage (62) de manière espacée de la plaque en verre fixe (22) de sorte que l'encapsulation (42) est disposée entre la plaque en verre fixe (22) et la partie formant décoration (28) pour relier la plaque en verre fixe (22) à la partie formant décoration (28).

8. Procédé selon l'une quelconque des revendications 1 à 7, selon lequel le matériau polymérique est injecté dans la première cavité de moulage (60) pour former la base en polymère (30) présentant une surface extérieure (34), une surface intérieure opposée (36) et une extrémité terminale (38) s'étendant entre les surfaces (34, 36) ; et
le matériau polymérique est injecté dans la deuxième cavité de moulage (68) pour former l'encapsulation (42), couplée de manière simultanée à la surface intérieure (36) de la base en polymère (30), l'extrémité terminale (38) de la base en polymère (30) et la périphérie de la plaque en verre fixe (22).
